# EUROPÄISCHE PATENTSCHRIFT

(11) **EP 0 871 678 B1**
(45) Veröffentlichungstag und Bekanntmachung des Hinweises auf die Patenterteilung: **09.07.2003**
(21) Anmeldenummer: 96944675.6
(22) Anmeldetag: 30.12.1996
(51) Int. Cl.: C08G 63/553, C08G 63/676, C08G 18/83, C08F 299/04, C08G 65/32, C08G 65/48, C08G 61/04, C08G 71/04, C08G 69/48, C08G 59/14, C08G 67/02

(54) **POLYFUNKTIONELL REAKTIVE POLYMERE STOFFE**
POLYFUNCTIONALLY REACTIVE POLYMER SUBSTANCES
MATIERES POLYMERES REACTIVES POLYFONCTIONNELLES

(30) Priorität: 04.01.1996 DE 19600155
(43) Veröffentlichungstag der Anmeldung: 21.10.1998
(73) Patentinhaber: BASF Coatings AG, 48165 Münster (DE)
(72) Erfinder: BLUM, Rainer, D-67069 Ludwigshafen (DE); HÄUSSLING, Lukas, D-67098 Bad Dürkheim (DE); REICH, Wolfgang, D-67133 Maxdorf (DE)
(74) Vertreter: Isenbruck, Günter, Dr.
(86) Internationale Anmeldenummer: EP9605863
(87) Internationale Veröffentlichungsnummer: WO97025365

(56) Entgegenhaltungen:
- DD-A- 238 568
- DD-A- 253 252
- DD-A- 253 253
- DD-A- 256 803
- DD-A- 257 442
- DD-A- 257 945
- DD-A- 261 056
- DE-A- 2 412 556
- DE-A- 2 708 846
- DE-A- 2 948 323
- DE-A- 3 807 931
- PATENT ABSTRACTS OF JAPAN vol. 003, no. 123 (C-061), 16.Oktober 1979 & JP 54 101870 A (HITACHI CHEM CO LTD), 10.August 1979,
- CHEMICAL ABSTRACTS, vol. 119, no. 24, 13.Dezember 1993 Columbus, Ohio, US; abstract no. 250616, XP002029183 & NIPPON KAGAKU KAISHI, Bd. 9, 1993, Seiten 1077-1084, TANAKA, H. ET AL.: "The study on polyester ..."

## Beschreibung

Die vorliegende Erfindung betrifft polyfunktionell reaktive polymere Stoffe, die Struktureinheiten des Dihydrodicyclopentadiens und/oder dessen Oligomeren enthalten.

Ungesättigte Polyesterharze mit Struktureinheiten, abgeleitet von Dicyclopentadien (=DCPD) bzw. Dihydrodicyclopentadien (=DHCPD), die in der Regel gelöst in monomeren Reaktivverdünnern wie Styrol, α-Methylstyrol, Vinyltoluol, Allylphthalat, Acrylaten, Vinylaten, Vinylethern o.ä. verwendet werden, sind Gegenstand zahlreicher Veröffentlichungen

Bekannte monomere Verbindungen sind beispielsweise Maleinsäure-Dihydrodicyclopentadienol-monoester (CAS 56 102-16-0, 27 063-31-6, 28 347-17-3, 25 102-16-0, 27 063-31-6, 28 347-17-3, 29 725-36-8, 53 702-55-9, 56 102-16-0, 74 033-90-2, 100 429-54-7),
Maleinsäure-Dihydrodicyclopentadienol-diester (CAS 116 296-55-0, 151 379-31-6, 114 422-30-9),
Ester des Maleinsäure-Dihydrodicyclopentadienol-monoesters mit
n-Butanol (CAS 117 205-58-0, 116 057-35-3),
Ethylhexanol (CAS 17 205-57-9, 116 057-34-2),
Isopropylenglykol (Diester) (CAS 78 099-70-4),
Ethylenglykol (Mono- und Diester) (CAS 78 099-70-4, 78 820-56-1),
Trimethylolpropan (Monoester) (CAS 98 312-78-8),
Propylenglykol (Monoester) (CAS 98 520-75-3),
1,3-Butandiol (Monoester) (CAS 98 392-84-8),
Diethylenglykol (Mono- und Diester) (CAS 73 794-24-8),
Neopentylglykol (Monoester) (CAS 121 830-76-0).

Aufgabe der vorliegenden Erfindung ist, neue polyfunktionell reaktive polymere Stoffe zur Verfügung zu stellen, die gegenüber dem bekannten Stand der Technik wesentliche Vorteile hinsichtlich Herstellung, Verarbeitung und Anwendungsspektrurn aufweisen.

Überraschenderweise läßt sich diese Aufgabe durch polyfunktionell reaktive polymere Stoffe lösen, die Dihydrodicyclopentadien bzw. dessen Oligomere über bestimmte Brückenglieder an bestimmte Polymerhauptketten gebunden enthalten.

Gegenstand der vorliegenden Erfindung sind polyfunktionell reaktive polymere Stoffe, die mindestens zweimal im Molekül Struktureinheiten der allgemeinen Formel (I) und/oder (II) 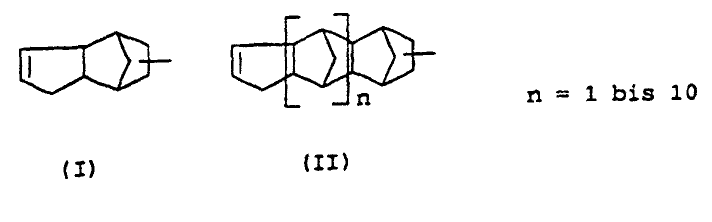 aufweisen und deren Polymerhauptkettenverknüpfungen C-C-Bindungen, Etherbindungen, Urethanbindungen, Amidbindungen, Ketonbindungen oder Kombinationen dieser Bindungen sind.

Bei diesen erfindungsgemäßen polyfunktionell reaktiven polymeren Stoffen sind die Struktureinheiten der allgemeinen Formeln (I) und/oder (II) vorzugsweise über Brückenglieder -X- entsprechend den Formeln (III) und/oder (IV) 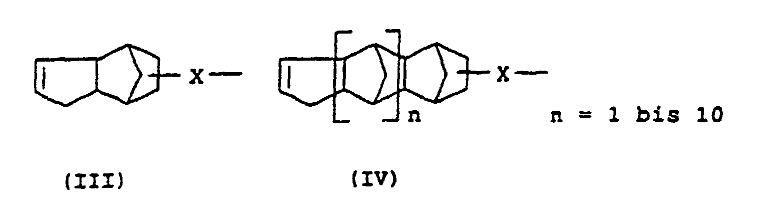 an die Polymerhauptkette gebunden, wobei -X- für Sauerstoff, 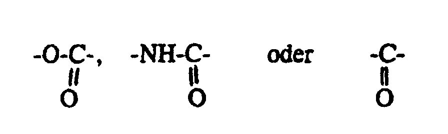 steht.

In den erfindungsgemäßen polymeren Stoffen können die Struktureinheiten der allgemeinen Formeln (I) und/oder (II) als Umsetzungsprodukte von Verbindungen der Formeln (V) und/oder (VI) 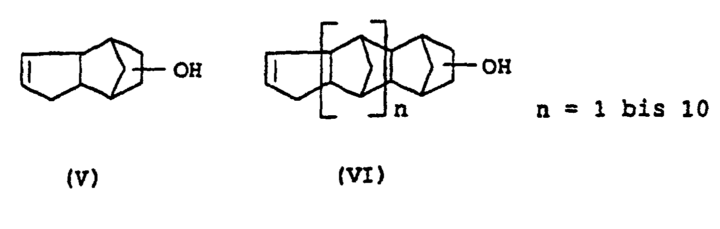 mit polymeren Stoffen, die gegenüber Hydroxylgruppen reaktive Gruppierungen tragen, in die polymeren Stoffe eingebaut sein, wobei derartige polymere Stoffe beispielsweise als Umsetzungsprodukte von Verbindungen der Formel (V) und/oder (VI) mit Polymeren, die Carboxylgruppen, Isocyanatgruppen, Epoxydgruppen oder Hydroxylgruppen aufweisen, erhältlich sind.

Eine besonders bevorzugte Ausführungsform der erfindungsgemäßen polymeren Stoffe besteht auch darin, die Struktureinheiten der allgemeinen Formeln (I) und/oder (II) als Umsetzungsprodukte von Verbindungen der Formeln (VII) und/oder (VIII) 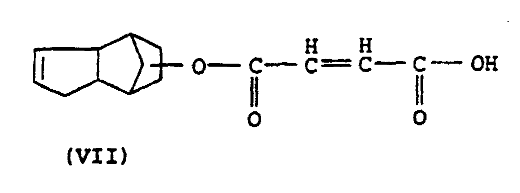 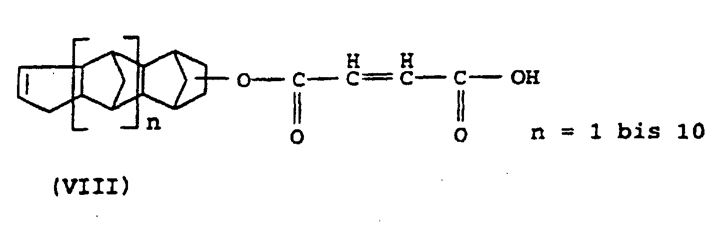 mit polymeren Stoffen, die gegenüber Carboxylgruppen reaktive Gruppen tragen, in die polymeren Stoffe einzubauen, wobei derartige polymere Stoffe beispielsweise erhältlich sind als Umsetzungsprodukte von Verbindungen der Formeln (VII) und/oder (VIII) mit Polymeren, die als gegenüber Carboxylgruppen reaktive Gruppen Isocyanat-, Epoxid-, Hydroxyl- und/oder Aminogruppen aufweisen.

Die erfindungsgemäßen polyfunktionell reaktiven polymeren Stoffe weisen im allgemeinen mittlere Molekulargewichte Mₙ zwischen 200 und 1000000, vorzugsweise zwischen 500 und 50000 auf.

Die erfindungsgemäßen polymeren Stoffe tragen Struktureinheiten der allgemeinen Formel (I) und (II) abgeleitet von Dihydrodicyclopentadien (DCPD). Sie können sowohl linear als auch einfach oder mehrfach verzweigt sein und haben modellhaft die in den Formeln (IX) und (X) wiedergegebenen Strukturen, die aber auch andere Verzweigungsformen als die im folgenden gezeigten Beispiele aufweisen können, worin -X- steht für eine Brückengruppe, D- für eine Struktur der Formeln (I) und/oder (II).

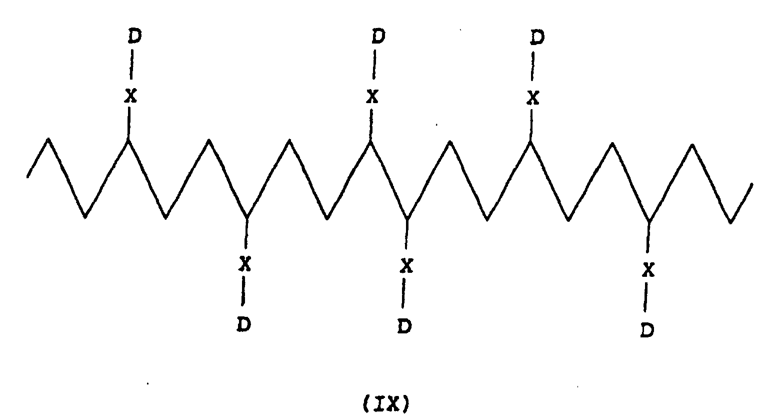

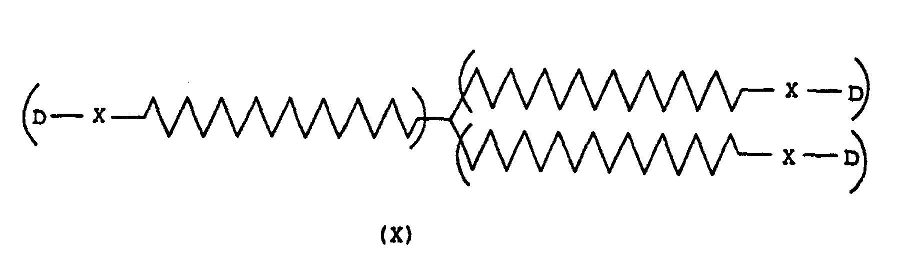

Gut zugänglich sind Stoffe bei denen -X- für eine Estergruppe steht und die durch Addition von DCPD an polyfunktionelle Polycarbonsäuren erhalten werden. Diese Umsetzung kann vorteilhaft in Gegenwart von Katalysatoren z.B. Bortrifluoritetherat durchgeführt werden.

Sehr leicht zugänglich sind die Addukte von Maleinsäureanhydrid und Wasser an DCPD der Formeln (VII) und (VIII), mit denen die erfindungsgemäßen Stoffe durch Umsetzung mit carboxylreaktiven Stoffen erhältlich sind. Solche carboxylreaktiven Stoffe sind z.B. mono- und polyfunktionelle polymere Hydroxyverbindungen, Carbonsäureester von mono- und polyfunktionellen, monomeren oder polymeren Hydroxylverbindungen, mono- und polyfunktionelle, monomere oder polymere Epoxyde, hydroxyfunktionelle natürliche Öle und Harze, epoxydierte natürliche Öle und Harze, mono- und polyfunktionelle, monomere oder polymere Isocyanate, sowie mono- und polyfunktionelle, monomere oder polymere Amine.

Weiter ist Dihydrodicyclopentadienol der Formel (V) kommerziell verfügbar und kann zum Aufbau der erfindungsgemäßen Stoffe, durch Umsetzung mit Stoffen, die mit OH-Gruppen reaktiv sind, erhalten werden.

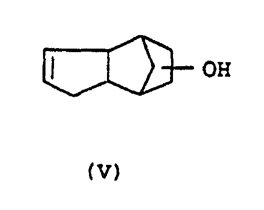

Solche hydroxylreaktiven Stoffe sind z.B. polyfunktionelle monome oder polymere Carboxylverbindungen, polyfunktionelle monomere oder polymere Epoxyde, carboxylfunktionelle natürliche Öle und Harze, epoxydierte natürliche Öle und Harze, polyfunktionelle monomere oder polymere Isocyanate, polyfunktionelle monomere oder polymere Hydroxylverbindungen, polyfunktionelle, monomere oder polymere Carbonsäureester.

Enthalten die erfindungsgemäßen Stoffe ethylenische Doppelbindungen, z.B. als Maleinsäure- oder Fumarsäureester, so werden durch Pfropfung mit Cyclopentadien Endomethylentetrahydrophthalsäurestrukturen der folgenden Formel erzeugt.

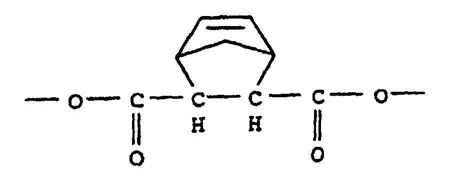

Bei allen genannten Wegen zu den erfindungsgemäßen Stoffen handelt es sich um beispielhafte, meist auch vorteilhafte Herstellmethoden. Die Erfindung beansprucht jedoch nicht nur Stoffe, die nach den aufgezeigten Methoden erhalten werden.

Ein wichtige Klasse von beanspruchten Stoffen der vorliegenden Erfindung sind die Ester von Stoffen der Formeln (VII) und (VIII) mit verzweigten Alkan-, Alken- und Alkindiolen, ethoxyliertem oder propoxyliertem Trimethylolpropan, Pentaerythrit, ethoxyliertem oder propoxyliertem Pentaerythrit, Glycerin, ethoxyliertem oder propoxyliertem Glycerin, Neopentylglykol, ethoxyliertem oder propoxyliertem Neopentylglykol, 2-Ethyl-2-Butyl-1,3--Propandiol, ethoxyliertem oder propoxyliertem 2-Ethyl-2-Butyl-1,3-Propandiol, mit Sorbitol, Inositol, Anhydrosorbitol und den Alkoxylierungsprodukten dieser Stoffe, die Ester innerer Ether von Polyolen wie z.B. Di-Trimethylolpropan, Di-Pentaerythrit, die Ester von ethoxylierten oder propoxylierten inneren Ethern von Polyolen wie z.B. Di-Trimethylolpropan oder Di-Pentaerythrit, Dimethylolpropionsäure, Polyethylenglykolmonoalkylethern, Polypropylenglykolmonoalkylethern, Polyethylenglykolmonoalkylestern, Polypropylenglykolmonoalkylestern, Polyester- und Polyetherpolyolen vom Typ Polyethylenoxyd, Polypropylenoxyd, Polytetrahydrofuran und Polycaprolacton.

Durch die Art der Alkoxylierungsmittel und den Grad der Alkoxylierung lassen sich auch Eigenschaften der Endprodukte wie z.B. Härte, Hydrophilie und Elastizität steuern. Solche polyfunktionelle Hydroxyverbindungen können auch nur z.T. mit Stoffen der Formeln (VII) und (VIII) verestert sein, wobei die restlichen Hydroxylgruppen entweder frei bleiben oder mit anderen Stoffen verestert oder verethert sein oder mit anderen, reaktiven Stoffen umgesetzt sein können, z.B. mit Isocyanaten oder Epoxyden. Hierfür kommen in Frage Polyole, die nur z.T. mit Stoffen laut Formeln (VII) und (VIII) verestert sind, wobei die anderen Hydroxylgruppen mit Stoffen, die ethylenische Doppelbindungen tragen, umgesetzt sein können. Solche Stoffe tragen dann am gleichen Molekül sowohl die Ester der Stoffe der Formeln (VII) und (VIII), als auch z.B. Allyl- und/oder Vinylether, und/oder (Meth)-Acrylester. Weiter sind als Reaktionskomponenten von Bedeutung hydroxylgruppenhaltige natürliche Harze oder Öle wie z.B. Rizinusöl.

Es ist auch möglich erfindungsgemäße Stoffe herzustellen, die eine erhöhte Lichtempfindlichkeit dadurch aufweisen, daß sie im Molekül H-Akzeptor-Gruppen tragen, die z.B. eingebaut werden können über hydroxyfunktionelle Phenonverbindungen, wie z.B. Hydroxy- oder Bishydroxy-Benzophenon durch Teilumsetzung mit Polymeren die mit Hydroxyverbindungen reaktiv sind, wie polyfunktionellen Isocyanaten. Bei diesem Beispiel können dann die Gruppen der Formeln (I) und (II) über mit Isocyanat-reaktive Dicyclopentadienverbindungen eingeführt werden.

Eine bevorzugte und einfache Methode zur Herstellung erfindungsgemäßer Stoffe ist auch die Amidierung oder Veresterung von Stoffen laut Formeln (VII) und (VIII) mit polyfunktionellen Aminen oder polyfunktionellen Hydroxylverbindungen (Polyolen) bei höherer Temperatur ggf. in Gegenwart von Katalysatoren, wie tert. Aminen, Zinnverbindungen oder Hypophosphorsäure. Die Einführung von Gruppen der Formel (II) bzw. Formel (VIII) kann dabei auch in der Weise erfolgen, daß zunächst mit der Carbonsäure der Formel(VII) amidiert bzw. verestert wird und dabei oder danach Dicyclopentadien zugegeben wird, wobei dann Strukturen der Formel (II) bzw. Formel (VIII) entstehen. Die Amidierung oder Veresterung kann auch in Gegenwart geeigneter Schlepplösemittel zum Austrag des Wassers erfolgen. Auch weitere bekannte Methoden der präparativen Chemie zur Heptellung von Amiden oder Estern sind im Prinzip geeignet, aus Kostengründen aber meist von geringerem Interesse.

Eine wichtige Stoffklasse sind auch die Umsetzungsprodukte von Stoffen der Formel (VII) bzw. Formel (VIII) mit polyfunktionellen Epoxydverbindungen, wobei in einer ersten Stufe eine Addition an die Epoxydgruppe erfolgt und unter energischeren Bedingungen auch die bei der ersten Stufe gebildeten Hydroxylgruppen verestert werden können, so daß hochreaktive, polyfunktionelle Stoffe gebildet werden.

Zur Einführung der Strukturen der Formeln (I) bzw. (II) in Stoffe, die mit Hydroxylgruppen polyfunktionell reagieren können, sind prinzipiell die Stoffe laut Formeln (III) und (IV) geeignet. Dihydrodicyclopentadienol ist kommerziell verfügbar aber relativ teuer. Kostengünstiger zugänglich sind die Halbester von Diolen mit Stoffen der Formel (VII) bzw. Formel (VIII), die dann mit z.B. Polyisocyanaten reagieren können.

Die erfindungsgemäßen polymeren Stoffe können sowohl unter energiereicher Strahlung, bevorzugt UV-Licht, als auch radikalisch bei Raumtemperatur mit bekannten Kombinationen von Peroxyden und Co-Initiatoren wie z.B. Schwermetallsalzen, sowie durch Wärme mit thermisch radikalliefernden Startern, wie Peroxyden, Azostartern oder C-C-labilen Verbindungen mit sich selbst reagieren, d.h. oligomerisieren, polymerisieren, weiterpolymerisieren oder vernetzen. Die genannten Methoden zum Reaktionsstart können auch in beliebiger Kombination verwendet werden. Bevorzugt ist die kombinierte Anwendung von thermisch erzeugten Radikalen und durch UV-Licht erzeugten Radikalen. Auch die Reaktion zu einem B-Zustand, d.h. einem teilreagierten Zustand, bei dem die Reaktion unterbrochen ist und später wieder gestartet werden kann, ist möglich.

Eine erhebliche Beschleunigung der Härtung, bzw. Absenkung der Härtungstemperatur ist mit Metallcoinitiatoren wie Kobalt-, Mangan-, Eisen-, Nickeloder Bleiverbindungen möglich. Weiter weisen die erfindungsgemäßen Stoffe in Gegenwart von UV-Initiatoren vom Typ der α-Spalter (Norrish-Typ 1) oder der H-Donor/Akzeptor-Systeme (Norrish-Typ 2) eine hohe UV-Empfindlichkeit auf.

Die erfindungsgemäßen Stoffe können Verwendung finden in Kombination mit ungesättigten Polyestern, in diesem Falle können sie die, bei ungesättigten Polyestern üblichen Reaktivverdünner, wie Styrol, Vinyltoluol, α-Methylstyrol, Acrylester, Methycrylester, Allylester, Vinylester oder Vinylether u.a. ganz oder zum Teil ersetzen.

Außerdem können die erfindungsgemäßen Stoffe Verwendung finden in ungesättigten Systemen in Kombination mit polymerisierbaren Acrylaten, Methacrylaten, Allylethern, Allylestern, Polyesteracrylaten, Polyetheracrylaten, Urethanacrylaten, Epoxyacrylaten, Vinylestern oder Vinylethern.

Weiter können die erfindungsgemäßen Stoffe bekannten, thermisch härtenden Systemen zugesetzt werden, z.B. Einbrennlacken mit den verschiedensten Vernetzungsprinzipien, z.B. Einbrennlacken auf Basis von Aminoplastharzkombinationen mit Alkyd-, Polyacrylat-, Polyester-, Epoxyd- oder Polyurethanhatzen. In solchen und anderen bekannten, üblicherweise lösemittelhaltigen Lacken können flüssige erfindungsgemäße Stoffe diese Lösemittel ganz oder z.T. ersetzen.

Die neuen reaktiven Stoffe können für sich allein oder in den genannten oder auch in weiteren Kombinationen Verwendung finden als Lackbindemittel, Überzugsmassen, zur Herstellung kompakter oder Vergußmassen, Elektroisoliermassen, tageslichthärtbarer Straßenmarkierungsfarben, Dient- und Überzugsmittel, als Druckfarbenbindemittel, Klebemittel oder als Bindemittel für geordnete und wirre Faservliese aus organischen oder anorganischen Materialien.

Die in den Beispielen genannten Teile und Prozente sind, soweit nicht anders angegeben, Gewichtsteile bzw. Gewichtsprozente.

### Beispiel 1

In einem Rührkolben mit Heizung und Rückflußkühler, der auf Destillation umgestellt werden kann, wurden
- 661,10 g: Dicyclopentadien (5,0 Mol) und
- 490,30 g: Maleinsäureanhydrid (5,0 Mol)
eingewogen. Unter einem leichten Stickstoffstrom wurde diese Mischung auf 125°C erhitzt und dann über einen Tropftrichter innerhalb einer Stunde
- 95,00 g: Wasser (5,0 Mol + 5 g)
zugegeben. Es wurde bei 125°C eine Stunde nachreagieren lassen. Es bildete sich eine Monocarbonsäure der Formel (VII). Der Kolbeninhalt wurde auf 70°C abgekühlt. Dann wurden zugegeben
- 1730,00 g: Ethoxylierungsprodukt aus Trimethylolpropan und Ethylenoxyd mit einer OH-Zahl von 165 und
- 4,00 g: Dibutylzinndilaurat

Unter einem leichten Stickstoffstrom wurde rasch auf 120°C aufgeheizt. Dann wurde innerhalb von 6 Stunden die Temperatur allmählich auf 190°C erhöht und das entstehende Kondensationswasser abdestilliert.
Es resultierte ein viskoses Harz mit einer Säurezahl von 18 und Viskositäten von 12300 mPas bei 50°C, 9350 mPas bei 75°C und 1470 mPas bei 100°C.

### Beispiel 2

Es wurde wie in Beispiel 1 verfahren und eine Monocarbonsäure der Formel (VII) hergestellt. Die Veresterung erfolgte wie bei Beispiel1 aber mit
- 1300,00 g: Polyetherpolyol auf Basis von Propylenoxyd mit einem OH-Äquivalentgewicht von 253

Es resultierte ein viskoses Harz mit einer Säurezahl von 24 und Viskositäten von 2880 mPas bei 50°C und 570 mPas bei 75°C.

### Beispiel 3

Es wurde wie in Beispiel 1 verfahren und eine Monocarbonsäure der Formel (VII) hergestellt. Die Veresterung erfolgte wie bei Beispiel aber mit
- 5820,00 g: Polyetherpolyol auf Basis von Glycerin, Propylenoxyd und Ethylenoxyd mit einer OH-Zahl von 48

Es resultierte eine niedrigviskose Flüssigkeit mit einer Säurezahl von 31 und Viskositäten von 1380 mPas bei 25°C und 249 mPas bei 50°C.

### Beispiel 4

In einem Rührkolben mit Stickstoffspülung wurden
- 497,2 g: der Monocarbonsäure aus den obigen Beispielen (FonnelVII)
- 376,0 g: Epoxydharz auf Basis Bisphenol A
(kommerzielles Araldit R GY 2600, Ciba-Geigy)
- 0,8 g: Triphenylphosphin und
- 0,8 g: Hydrochinon
bei Raumtemperatur gemischt und dann aufgeheizt. Ab 110°C wurde eine exotherme Reaktion beobachtet, der Temperaturanstieg wurde durch Kühlung auf 144°C begrenzt, und bei 130°C noch 3 Stunden weitergerührt. Die resultierende Harzschmelze wurde auf eine Aluminiumfolie ausgegossen und erstarrt nach dem Abkühlen zu einem harten Harz mit einem Erweichungspunkt von 142°C.

Prüfung der gemäß den Beispielen 1 bis 4 hergestellten Produkte auf Härtbarkeit

Die gemäß den Beispielen 1 bis 3 erhaltenen Produkte wurden auf 60°C erwärmt und im Verhältnis 70:30 mit gemäß Beispiel 4 erhaltenem Produkt verrührt. Diese Mischungen sind bei Raumtemperatur gut fließend und haben bei 50°C folgende Viskositäten:

| 70 Teile | 30 Teile | Viskosität: |
|---|---|---|
| Produkt von Beispiel 1 | + Produkt von Beispiel 4 | 17800 mPas |
| Produkt von Beispiel 2 | + Produkt von Beispiel 4 | 4200 mPas |
| Produkt von Beispiel 3 | + Produkt von Beispiel 4 | 2350 mPas |

Proben dieser Mischungen wurden mit 4 % t.-Butylperbenzoat und 3% Benzophenon, bezogen auf die Gesamtmenge, katalysiert. Dann wurde jeweils soviel in einen tiefen Blechdeckel gegossen, daß dieser ca. 2 cm hoch gefüllt war. Die Blechdeckel wurden dann auf einer Heizplatte bei 50°C mit einer Quecksilbermitteldrucklampe mit einer Energie von 80 mW/cm² für 60 Sekunden bestrahlt. Dabei bildete sich eine leicht klebrige Haut von ca. 0,3 mm Dicke, unter der die Hauptmasse noch flüssig war. Die Blechdeckel wurden dann in einem Ofen bei 140°C 4 Stunden getempert. Nach dem Abkühlen wurden kompakt durchgehärtete Harzblöcke erhalten.

Proben der katalysierten, gebrauchsfertigen Mischungen wurden bei 40°C 48 Stunden gelagert. Danach hat sich weder ihre Viskosität noch ihr Härteverhalten geändert.

Weitere Proben der Mischungen wurden gemischt mit 4 % Methylisobutylketonperoxid, 2 % Kobaltoctoat (1-%ig in Toluol) und 3 % Benzophenon. Von diesen Mischungen wurden jeweils soviel in einen tiefen Blechdeckel gegossen, daß dieser ca. 2 cm hoch gefüllt war. Die Blechdeckel wurden dann bei Raumtemperatur mit 80 mW/cm² mit einer Quecksilbermitteldrucklampe fiir 60 Sekunden bestrahlt. Dabei bildete sich eine klebrige Haut von ca. 0,3 mm Dicke, unter der die Hauptmasse noch flüssig war. Die Blechdeckel wurden dann bei Raumtemperatur (ca. 25°C) gelagert. Nach 20 Stunden wurden kompakt durchgehärtete Harzblöcke erhalten. Die Versuche ohne Bestrahlung zeigen die Möglichkeit der Kalthärtung der erfindungsgemäßen Stoffe.

Von den unkatalysierten Mischungen wurden mit einer Rakel Filme von ca. 30 - 60 µm auf gereinigte Stahlbleche aufgezogen und im Ofen bei 160°C für 30 Minuten eingebrannt. Es resultierten harte, biegeelastische, gut haftende Filme.

## Patentansprüche

1. Durch Wärme oder Strahlung härtbare Masse enthaltend ungesättigte Polyester, enthaltend
a) eine polymere Verbindung, die mindestens zweimal im Molekül Struktureinheiten einer der allgemeinen Formeln I und II aufweist und deren Polymerhauptkettenverknüpfungen Etherbindungen sind, und 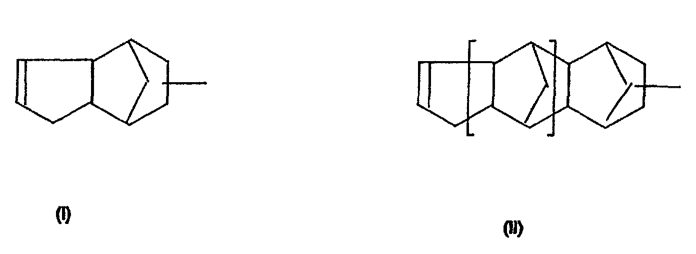
b) gegebenenfalls weitere übliche Zusätze fiir wärme- oder strahlungshärtbare Massen, ausgenommen monomere polymerisierbare Verbindungen.

2. Härtbare Masse nach Anspruch 1, **dadurch gekennzeichnet, daß** sie zusätzlich ein als Lackbindemittel geeignetes Polymeres enthält.

3. Härtbare Masse nach Anspruch 1, **dadurch gekennzeichnet, daß** sie zusätzlich einen Polymerisations- oder Vernetzungskatalysator enthält.

4. Härtbare Masse nach Anspruch 2, **dadurch gekennzeichnet, daß** das als Lackbindemittel geeignete Polymere ein als Einbrennlack geeignetes thermisch härtbares Polymeres ist.

5. Härbare Masse nach Anspruch 3, **dadurch gekennzeichnet, daß** der Polymerisations- oder Vernetzungskatalysator ein radikalliefernder Initiator ist.

6. Härtbare Masse nach Anspruch 1, **dadurch gekennzeichnet, daß** die Struktureinheiten der allgemeinen Formeln (I) und/oder (II) über Brükkenglieder -X- entsprechend den Formeln (III) und/oder (IV) 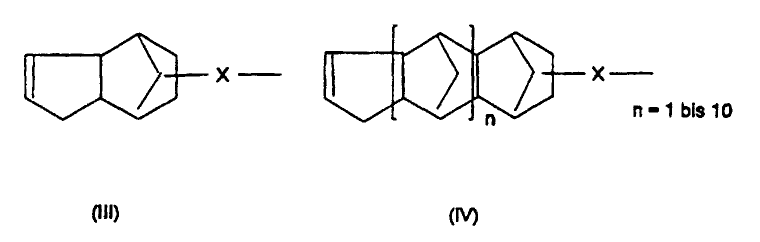 an die Polymerhauptkette gebunden sind, wobei -X- für Sauerstoff, 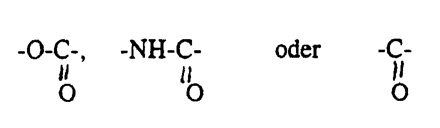 steht.

7. Härtbare Masse nach Anspruch 1, **dadurch gekennzeichnet, daß** die Struktureinheiten der allgemeinen Formeln (I) und/oder (II) als Umsetzungsprodukte von Verbindungen der Formeln (V) und/oder (VI) 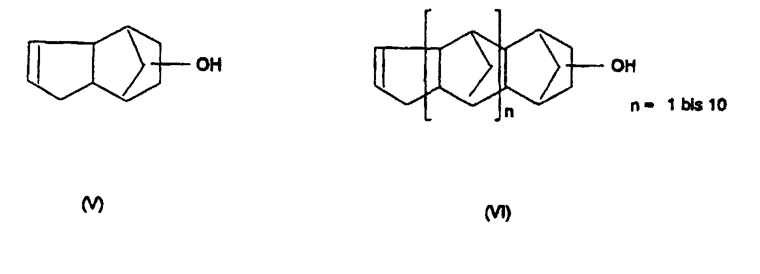 mit polymeren Stoffen, die gegenüber Hydroxylgruppen reaktive Gruppierungen tragen, in die polymeren Stoffe eingebaut sind.

## Claims

1. Heat- or radiation-curable unsaturated polyester composition, comprising
a) a polymeric compound which contains at least two structural units of the general formulae I and II in the molecule and whose polymer backbone linkages are ether bonds, and 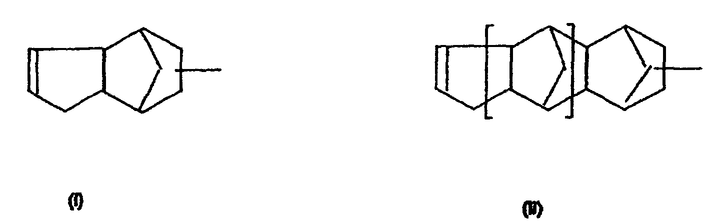
b) optionally further customary ingredients for heat- or radiation-curable compositions, excluding monomeric polymerizable compounds.

2. A curable composition as claimed in claim 1, **characterized in that** it further comprise a polymer useful as a paint binder.

3. A curable composition as claimed in claim 1, **characterized in that** it further comprises an addition polymerization or crosslinking catalyst.

4. A curable composition as claimed in claim 1, **characterized in that** the polymer useful as a paint binder is a thermally curable polymer useful as a baking finish.

5. A curable composition as claimed in claim 3, **characterized in that** the addition polymerization or crosslinking catalyst is a radical-generating initiator.

6. A curable composition as claimed in claim 1, **characterized in that** the structural units of the general formulae (I) and/or (II) are bonded to the polymer backbone via bridging members -X-conforming to the formulae (III) and/or (IV) 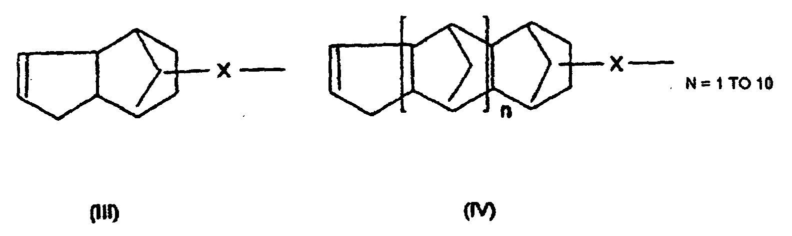 where -X- is oxygen,

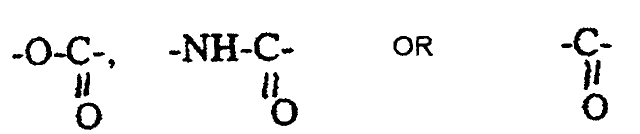

7. A curable composition as claimed in claim 1, **characterized in that** the structural units of the general formulae (I) and/or (II) are incorporated in the polymeric substances as reaction products of compounds of the formulae (V) and/or (VI) 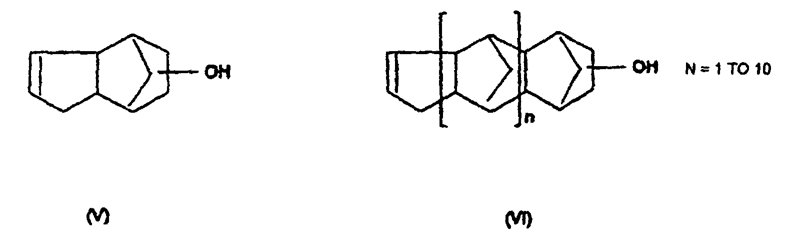 with polymeric substances which carry moieties which are reactive toward hydroxyl groups.

## Revendications

1. Masse durcissable sous l'effet de la chaleur ou d'un rayonnement, contenant des polyesters insaturés, contenant
a) un composé polymère, qui comporte au moins deux fois dans sa molécule des motifs structuraux ayant l'une des formules générales et II, et dont les liaisons de la chaîne principale du polymère sont des liaisons éther, 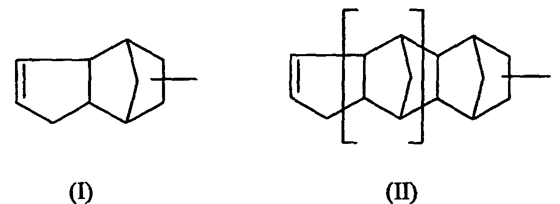 et
b) éventuellement d'autres additifs usuels pour masses durcissables sous l'effet de la chaleur ou d'un rayonnement, à l'exception de composés monomères polymérisables.

2. Masse durcissable selon la revendication 1, **caractérisée en ce qu'**elle contient en outre un polymère convenant en tant que liant pour peintures et vernis.

3. Masse durcissable selon la revendication 1, **caractérisée en ce qu'**elle contient en outre un catalyseur de polymérisation ou de réticulation.

4. Masse durcissable selon la revendication 2, **caractérisée en ce que** le polymère convenant en tant que liant pour peintures et vernis est un polymère durcissable à la chaleur et convenant en tant que vernis au four.

5. Masse durcissable selon la revendication 3, **caractérisée en ce que** le catalyseur de polymérisation ou de réticulation est un amorceur radicalaire.

6. Masse durcissable selon la revendication 1, **caractérisée en ce que** les motifs structuraux ayant les formules générales (I) et/ou (II) sont liées à la chaîne principale du polymère par des chaînons pontants -X- correspondant aux formules (III) et/ou (IV) 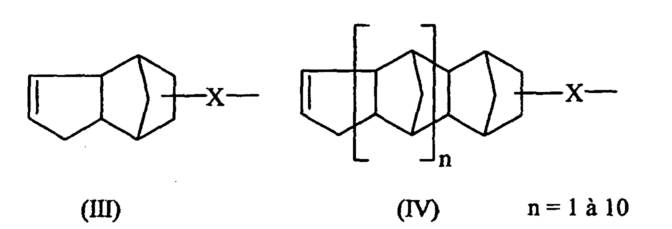 dans laquelle -X- est un atome d'oxygène.

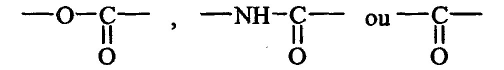

7. Masse durcissable selon la revendication 1, **caractérisée en ce que** les motifs structuraux ayant les formules générales (I) et/ou (II) sont incorporés dans les substances polymères sous forme de produits de la réaction de composés ayant les formules (V) et/ou (VI) 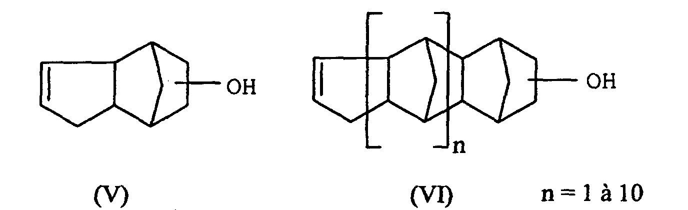 avec des substances polymères qui portent des groupements réactifs vis-à-vis des groupes hydroxyle.
